# EUROPEAN PATENT APPLICATION

(11) **EP 1 164 519 A2**
(43) Date of publication of application: **19.12.2001**
(21) Application number: 01105483.0
(22) Date of filing: 14.03.2001
(51) Int. Cl.: G06F 17/60

(54) **A computer apparatus for monitoring and updating accountancy records**

(30) Priority: 15.03.2000 GB 0006294
(71) Applicant: Ahmed, Nadeem, Leeds LS14 3HY (GB)
(72) Inventor: Ahmed, Nadeem, Leeds LS14 3HY (GB)
(74) Representative: VOSSIUS & PARTNER

(57) **Abstract**

A computer network is provided comprising a plurality of computers (1,2) and a server (4) connected via a communications network (3). Each of the plurality of computers (1,2) contains an accountancy system (5) for storing records indicative of mutual obligations between companies. The plurality of computers (1,2) also each contain the invoice processing module (9) for monitoring the amendment of records within the accountancy system (5). Whenever an amendment is made to the records of the accountancy system (5) the invoice processing module (9) causes a message to be generated that is sent via the communication network (3) and the server (4) to a selected one of the other computers of the plurality of computers (1,2) associated with a company to which the mutual obligation of the record relates. On receipt of a message an invoice processing module (9) of that computer causes the accountancy system (5) within that computer to be updated to reflect the change of the mutual obligation.

## Description

The present application relates to computer apparatus for monitoring and updating the content of accountancy records within computerised accountancy systems. In particular the present invention concerns apparatus for monitoring and updating the content of computerised accountancy systems via a computer network.

In conventional accountancy systems when an invoice is raised a hard copy of the invoice is printed out and then dispatched to the other party to a contract. When the hard copy invoice is received by a company, the content of the hard copy invoice is checked to determine whether it accurately reflects the contract into which the company has entered and if the information on the invoice is considered to be acceptable, an entry is then made into the accounting system of that company to reflect acceptance of liability for the invoice.

When payment of an invoice is made a record is updated within an accountancy system indicating that liability corresponding to the payment has been discharged and a cheque or other form of payment has been sent to honour the invoice. When a cheque or other form of payment is received by a company it is matched to an invoice within their accountancy system and the records of that accountancy system are then amended to reflect the fact that payment has been received.

A problem with known computerised accountancy systems is that the repeated matching and checking of paper invoices and subsequent manual entry of data into accountancy systems is time consuming. However, the checking involved is considered necessary in order to maintain the integrity of accountancy records and to ensure that such records accurately reflect the liabilities accepted by a company.

In accordance with one aspect of the present invention there is provided a network computer system comprising a plurality of computers each having stored therein a computerised accountancy system, and a communications network arranged to facilitate the dispatch of data between said plurality of computers, characterised in that each of said plurality of computers further comprises:
monitoring means for monitoring the input and updating of records within said accountancy system of said computer; message output means for outputting to said communications network on the basis of the monitoring by said monitoring means data indicative of records input or updated in said accountancy system and accountancy update means for receiving data from said communications network, said accountancy update means being arranged to utilize said data output by said output means to cause the generation or update of records within said accountancy system.

In accordance with this aspect of the present invention as the content of the input or update of records from an accountancy system is utilized to cause the generation or update of records within another accountancy system of the computer network, a means is provided by which when an invoice is raised or paid, data relating to the invoice needs only to be input into the computer network once by a sender thus reducing the necessity to re-input data and therefore the likelihood of error.

In an embodiment of the present invention by arranging the accountancy updating to require external manual input of confirmation that the update of an accountancy record, a means is provided to maintain the integrity of the accountancy system.

Further objects and embodiments of the present invention will become apparent with reference to the following description and drawings in which:
Figure 1 is a schematic block diagram of a network of computers embodying the present invention;
Figure 2 is a schematic block diagram of an exemplary conventional accountancy system;
Figure 3 is a schematic block diagram of an exemplary data structure for storing data within an order processing database;
Figure 4 is a schematic block diagram of a data structure for storing data within a sales ledger database, debtor ledger database, purchase ledger database or creditor's ledger database;
Figure 5 is a schematic block diagram of the interaction between a conversion module and an invoice processing module in accordance with the present invention;
Figure 6 is a schematic block diagram of a server in accordance with an embodiment of the present invention;
Figure 7 is a flow diagram of the processing of a control module of an invoice processing module;
Figure 8 is a flow diagram of the processing of the control module following a determination that a review the content of account databases of an accountancy system is required;
Figure 9 is a schematic block diagram of a data structure for a message generated by a message generation module;
Figure 10 is a block diagram of a data structure for a remittance message;
Figure 11 is a schematic flow diagram of the processing of the control module following receipt of a message indicative of the raising of an invoice;
Figure 12 is a flow diagram of the processing of the control module following receipt of a message indicative of the payment of an invoice;
Figure 13 is a flow diagram of the processing of the control module following a determination that a statement has been requested;
Figure 14 is an exemplary data structure for a statement request message;
Figure 15 is a flow diagram of the processing of a server in accordance with an embodiment of the present invention; and
Figure 16 is an exemplary block diagram of a data structure for a statement generated by a server.

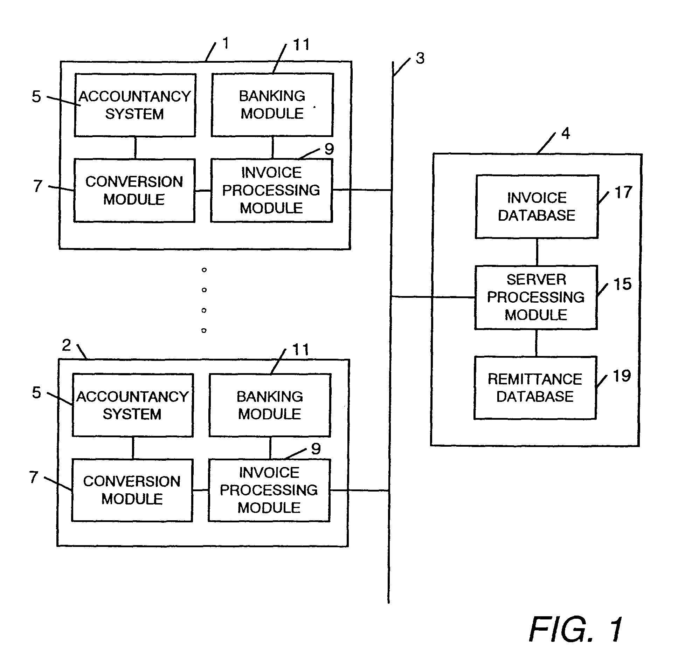

Figure 1 is a block diagram of a network of computers embodying the present invention. The network comprises a plurality of conventional computers 1,2 located at geographically separate locations within offices of different companies or departments. The plurality of computers 1,2 are connected to one another via a communications network 3 such as the Internet. A server 4 is also connected to the plurality of computers 1,2 via the communications network 3.

In accordance with this embodiment, each of the computers, 1,2 has stored therein an accountancy system 5 comprising a conventional accountancy system such as Sageline 50, Sageline 100 or The Great Plains Accountancy System. Connected to the accountancy system 5 is a conversion module 7 for converting the accountancy records stored within the accountancy system 5 from the format specific to that accountancy system into a standard format of record. In this embodiment, the conversion module 7 is arranged to convert format specific records with an accountancy system 5 into the format defined by the open database connectivity standard.

Additionally, within each of the computers 1,2 connected to the conversion module 7 is an invoice processing module 9 for monitoring and updating the content of the accountancy system 5. The invoice processing module 9 itself connected to a banking module 11 for obtaining bank account data from a bank (not shown) via the communications network 3.

Stored within the server 4 is a server processing module 15 for processing data received via the communication network 3 and for outputting data to the communications network 3. Also stored within the server 4 are an invoice database 17 and a remittance database 19.

In use the invoice processing modules 9 of the plurality of computers 1,2 monitor the entry of data into the records of the accounting system 5 within their respective computers 1,2. When changes to the records of accountancy system 5 indicative of the raising of a new sales invoice or payment of an invoice are detected the invoice processing module 9 of the computer within which the accountancy system 5 is located causes data which would in a conventional accountancy system be printed out as a sales invoice or payment advice note to be converted utilizing the conversion module 7 into a message for dispatch via the communications network 3. In this embodiment the messages comprise data in XML (Extendable Mark Up Language) which are then dispatched via the communications network 3 to the server 4, where a copy of the message is stored in the invoice database 17 or the remittance database 19.

A further copy of the message in XML is then sent from the server 4 to the computer of the company to which the invoice or payment relates. The invoice processing module 9 of that computer then causes the received message to be converted utilizing the conversion module 7 from XML into the format of record utilized by the accountancy system 5 of that computer. The invoice processing module 9 then causes the accountancy system 5 of the computer to be updated to reflect the acceptance of invoice or payment subject to confirmation by a user.

The provision of separate conversion modules 7 and invoice processing modules 9 within each of the computers of the network enables the update of accountancy records to occur regardless of the actual format of records stored within the individual accountancy systems since data of a specific format is transmitted via the communications network 3 between the computers of the network 1,2 and the server 4 which is entirely independent of any particular form of storage within the accounting systems 5.

At any time a user may input a request into the invoice processing module 9 to obtain a statement of invoices and remittances relating to an individual customer for a defined time period. This causes the invoice processing module 9 to generate a statement request message that is sent to the server 4 via the communication network 3. On receipt of a statement request message the server processing module 15 of the server 4 causes a statement to be generated from the copies of messages stored as records within the invoice database 17 and the remittance database 19 as will be described in detail later. The generated statement is then sent from the server 4 via the communications network 3 to the computer from where a request originated. Details of the transactions between a company and their customers may then be displayed.

In this way since details of invoices are readily accessible some of the difficulties of confirming the veracity of accounts are thereby avoided. The system also provides a simple means by which duplicate invoices may be generated since data representative of the content of invoices is directly available. Additionally, since the server 4 is separate from the plurality of computers 1,2, the server 4 acts as a backup system for the storing of financial data.

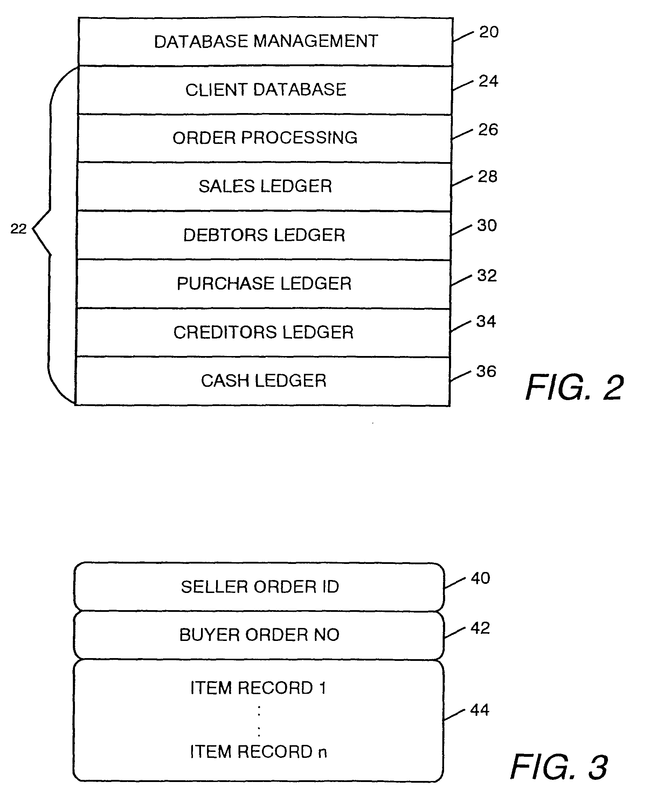

Prior to describing in detail the processing of data by the invoice processing module 9 and the server processing module 15, an exemplary accountancy system for storing and processing accountancy records will now be described with reference to Figures 2 to 4.

Figure 2 is a schematic block diagram of a conventional accountancy system such as Sageline 50, Sageline 100 or Great Plains Accountancy System. Conventional accountancy systems comprise: a database management programme 20 and a plurality of record databases 22. The database management program 20 enables data to be entered, processed and retrieved from the plurality of databases 22.

In a conventional accounting system the plurality of databases 22 normally comprise a client database 24 for storing records including details about customers for example customers' names, addresses and telephone numbers, an order processing database 26 for storing records including details of orders received; a sales ledger database 28 for storing records of sales invoices raised; a debtors ledger database 30 for storing records of sales invoices which have yet to be honoured; a purchase ledger database 32 for storing records of sales invoices received for purchases made; a creditors ledger database 34 for storing records of sales invoices received which have yet to be honoured and a cash ledger database 36 for storing details about the current amount of money within a company's bank accounts.

Figure 3 is a schematic block diagram of an exemplary data structure for storing data within an order processing database 26 of an accountancy system 5. Records within an order processing database 26 ordinarily comprise a seller's order ID number 40 identifying an order for a seller's records; a buyer order number 42 comprising a number identifying the request for items made by a buyer for the buyer's records and one or more item records 44 each containing data identifying the products ordered, the number of products ordered and price data such as the cost for each product and the rate at which tax is levied on the product.

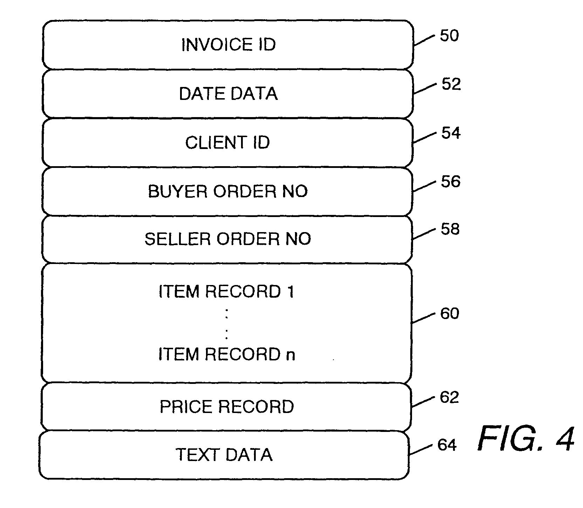

Figure 4 is a schematic block diagram of a data structure for storing data within a sales ledger database 28, a debtors ledger database 30, a purchase ledger database 32 and a creditors ledger database 34. Records in these databases comprise an invoice identification number 50 for identifying the invoice which caused the entry of the record onto the accountancy system; date data 52 comprising data identifying the date when an invoice was raised together with a tax point date; client identification data 54 comprising data identifying the client record within the client database 24 corresponding to the client to which an invoice relates, a buyer order number 56; a seller order number 58; one or more item records 60 each containing data identifying the products ordered, the number of products ordered and price data such as the cost for each product and the rate at which tax is levied on the product; and a price record 62 containing details of the total amount and total amount of tax due on the invoice; and text data 64 being a text description of the goods or services for which an invoice was raised.

For records within the sales ledger database 28 and debtors ledger database, the buyer order number 56, seller order number 58 and item records 60 normally will correspond to the buyer order number 42, seller order ID 40 and item records 44 of an order previously present in the order processing database 26 indicating that invoices have been raised in response to orders represented by the records in the order processing database 26. For records within the purchase ledger database 32 and credit ledger database 34, the buyer order number 56, seller order number 58 and item records 60 will normally correspond to the buyer order number 42, seller order ID 40 and item records 44 of an order processing record on an order processing database 26 of the accountancy system 5 of the supplier from whom invoices have been received.

In a conventional accounting system when an order is received an order record is entered using the database management program 20 into the order processing database 26 which relates the items identified by the item records 44 to a client within the client database 24. When an invoice is then raised for an order, records are generated within the sales ledger database 28 and the debtor's ledger database 30 identifying that a sale has been made and liability has been incurred by the purchaser. When payment of an invoice is received, after payment has been confirmed, the record on the debtor's ledger database 30 is updated to indicate the honouring of the debt and the cash ledger 36 is amended to account for the payment.

In a conventional accountancy system when an invoice is received from another company, records are created within the purchase ledger 32 and creditors ledger 34 and information from the invoice is then manually entered into the accountancy system to complete the new records. When payment of the invoice in the purchase ledger 32 is made the copy of a record for that invoice in the creditor's ledger 34 updated as being paid and the cash ledger 36 is adjusted to account for the making of the payment.

The applicant has appreciated that whilst intended to reflect opposite sides of the same transactions, conventional accountancy systems require repeated entry of the same data about an invoice giving rise to the need for additional labour and also additional opportunities for error. The applicant has further realised that the insistence on independent data entry largely arises from the need to ensure that the integrity of an accountancy system is maintained. In the present invention a means is provided to reconcile these two requirements and thus provide an accountancy system which reduces repeated data entry whilst providing means to ensure that accountancy records accurately reflect the liabilities accepted by an organisation.

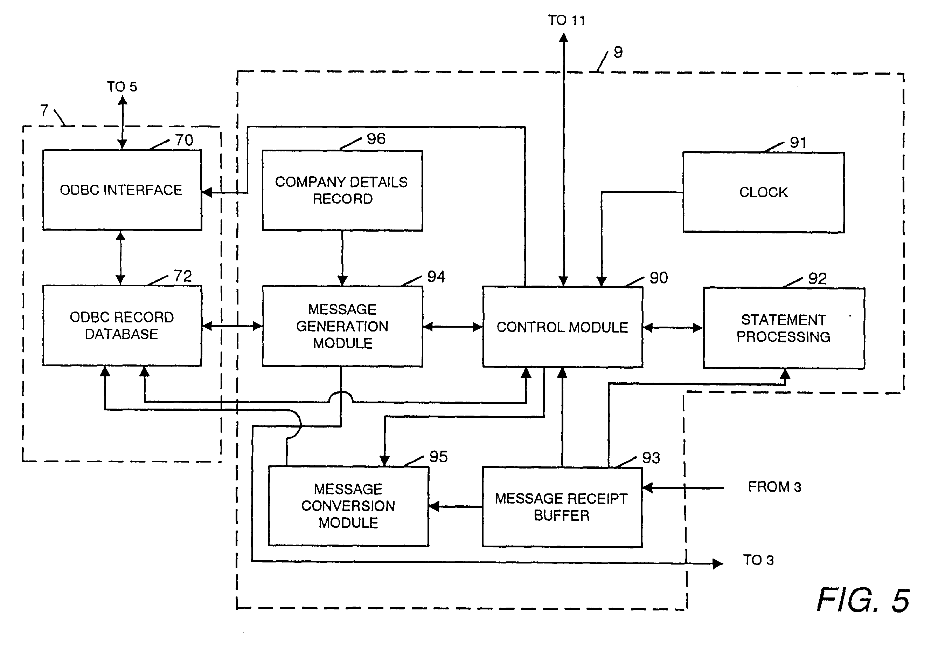

In this embodiment, this is achieved by the interaction of the conversion module 7 and invoice processing module 9 with the accountancy system 5 within a computer 1 and with other conversion modules 7 and invoice processing modules 9 via the communications network 3 and server 4, which will now be described with reference to Figures 5 to 16.

Figure 5 is a schematic block diagram showing in detail the interaction between the conversion module 7 and the invoice processing module 9 in a computer 1;2. In this embodiment, the conversion module 7 comprises a conventional conversion module for generating in a standard format copies of records stored in the specific format of records in an accountancy system 5. In this embodiment the specific format comprises the format defined as the open database connectivity format which enables accountancy data from one accountancy system to be transferred to other financial system programs.

The conversion module 7 comprises two parts, an open database connectivity interface 70 and an open database connectivity record database 72. The open database connectivity interface 70 is connected to the accountancy system 5 (not shown in Figure 5) and the open database connectivity record database 72 and is arranged to generate copies of records in a standard format from records in the system specific format of the accountancy system 5. The standard format records are then stored within the open database connectivity record database 72. The open database connectivity interface 70 is also arranged to convert records stored within the open database connectivity record database 72 stored in the open database connectivity record format into a format for storage within the accountancy system 5.

The invoice processing module 9 in accordance with this embodiment of the present invention comprises a control module 90 that is connected to both the open database connectivity interface 70 and the open database connectivity record database 72 of the conversion module 7. The control module 90 is also connected to a clock 91, a statement processing module 92, a message receipt buffer 93, a message generation module 94 and to the banking module 11 (not shown in Figure 5). The message receipt buffer 93 is arranged to receive data from the communications network 3 (not shown in Figure 5) and is also indirectly connected to the open database connectivity record database 72 of the conversion module 7 via a message conversion module 95. The message receipt buffer 93 is also connected to the statement processing module 92. The message generation module 94 in addition to being connected to the control module 90 is connected to a company details record 96 storing data about the company, the open database connectivity record database 72 of the conversion module 7 and is also arranged to output data to the communication network 3 (not shown in Figure 5).

As will be described in greater detail later the control module 90 is arranged to initiate the dispatch of data in response to the detection of the input of a new record into the sales ledger database 28 or the updating of a record in the creditors database 34 of an accountancy system 5; to coordinate the automatic update of the accountancy system 5 in response to received data from the communications network 3; and to enable statements of account to be viewed by a user inputting instructions into the statement processing module 92.

In this embodiment the initiation of the dispatch of data is achieved by the control module 90 being arranged to receive a clock signal from the clock 91. Periodically the control module 90 then instructs the open database connectivity interface 70 of the conversion module 7 to retrieve records from the accountancy system 5 (not shown in Figure 5) reflecting the issue of new sales invoices which are then stored in the open database connectivity record database 72. When the control module 90 receives from the open database connectivity record database 72 of the conversion module 7 a signal indicating that the records have been retrieved this then causes the control module 90 to invoke the message generation module 94 which generates utilizing data stored within the open database connectivity record and the company details record database 96 an XML message which is then dispatched via the communication network 3 to the server 4. The dispatched message then causes records with server 4 to be updated and for a further XML message to be dispatched to the computer 2 of the company or department to which an invoice or payment relates so that the accountancy system 5 of that company or department may be automatically updated.

When an XML message is received from the communications network 3 it is stored within the message receipt buffer 93 which causes a signal to be sent to the control module 90. The control module 90 then causes the message conversion module 95 to convert the XML message stored within the message receipt buffer 93 into an open database connectivity record which is then stored in the open database connectivity record database 72 of the conversion module 7 which is then used to cause the records of the accountancy system 5 to be updated as will be described in detail later.

The statement processing module 92 is arranged on receipt of an input signal from a user via an input device such as a keyboard or mouse (not shown) to cause a signal to be sent via the control module 90 to the message generation module 94 which causes a statement request to be sent via the communications network 3 to the server 4 (not shown in Figure 5). When statement data is dispatched to the computer this is received from the communications network 3 by the message buffer 93 which passes the data to the statement processing module 92 for display as will also be described in detail later.

The content and processing of a server 4 arranged to receive messages generated by the invoice processing models 9 of the plurality of computers 1,2 via a communications network 3 will now be described.

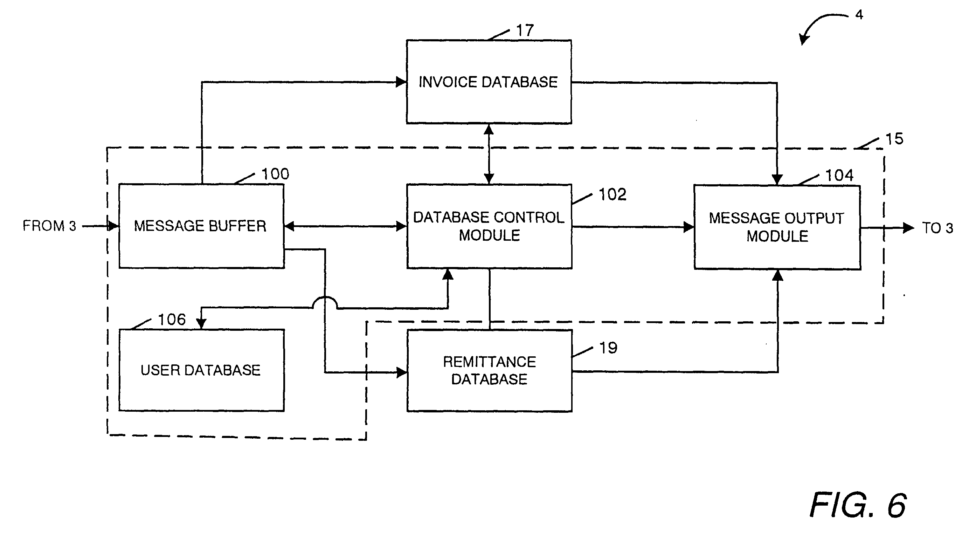

Figure 6 is a schematic block diagram of a server 4 in accordance with this embodiment which has stored therein a server processing module 15, an invoice database 17 and remittance database 19. The server processing module 15 comprises a message buffer 100, a database control module 102, a message output module 104, and a user database 106. The message buffer 100 is arranged to receive XML data from the communications network 3 (not shown in Figure 6) and is also connected to the invoice database 17 the database control module 102 and the remittance database 19. The database control module 102 is also connected to the invoice database 17, the remittance database 19, the user database 106 and the message output module 104. The message output module is itself also connected to the invoice database 17 and the remittance database 19 and is arranged to output data to the communications network 3.

When XML data is received from the communications network 3 it is stored in the message buffer 100 which causes a signal to be sent to the control module 102. If the XML data received by the message buffer 100 relates to the updating of records within an accountancy system 5 the database control module 102 then causes the data stored within the message buffer 100 to be stored as a record within the invoice database 17 or the remittance database 19 depending upon whether the message relates to the raising of invoices or payment of invoices. The database control module 102 then utilizes the data stored within the user database 106 to dispatch a further XML message comprising a copy of the record newly stored within either the invoice database 17 or the remittance database 19 to the invoice processing module of the computer corresponding to the other party to the invoice or payment as will be described in detail later.

If XML data received by the message buffer 100 relates to a request for the generation of a statement the database control module 102 then causes the message output module 104 to generate a statement comprising XML data representative of copies of records stored within the invoice database 17 and remittance database 19 which is then dispatched to the invoice processing module 9 from where the request for a statement originated as will also be described in detail later.

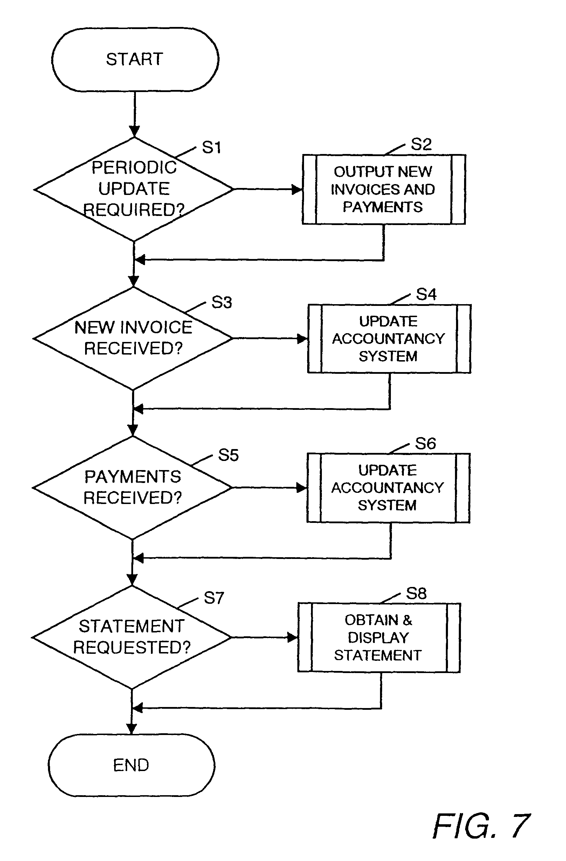

Processing of the invoice processing module 9 of the plurality of computers 1, 2 will now be described in detail with reference to Figures 7 to 13.

Figure 7 is a flow diagram of the processing of the control module 90 of the invoice processing module 9. When the processing of the control module 90 begins the control module 90 initially determines (S1) whether the time indicated by the clock 91 indicates that a determination of whether the content of the accountancy system 5 of the computer within which the invoice processing module 9 is present is required.

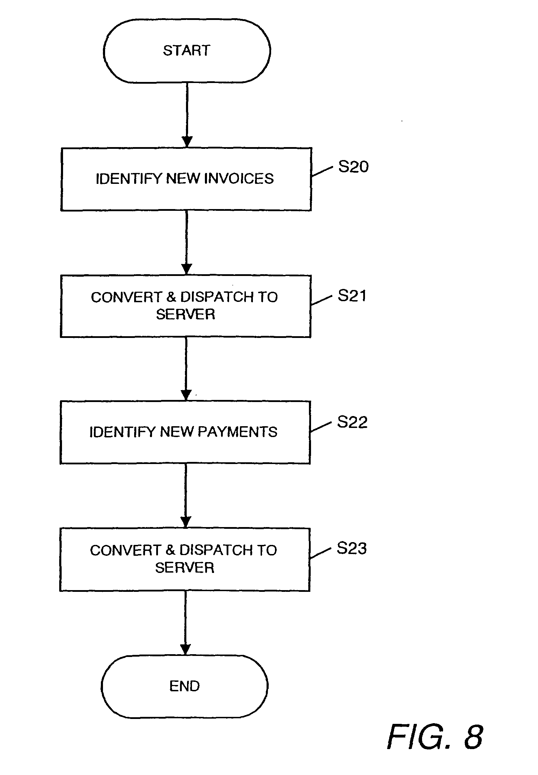

If the time indicated by the clock 91 indicates that a determination of whether any records have been entered in the sales ledger database 28 or records within the creditors ledger database 34 have been updated in the accountancy system 5 is required the control module 90 then (S2) causes recently entered or updated records within the accountancy system 5 to be identified and converted by the Open Database Connectivity interface 70 (hereinafter referred to as ODBC interface 70) and the message conversion module 95 and then dispatched to the server 4 as will be described in detail with reference to Figures 8 to 10 later.

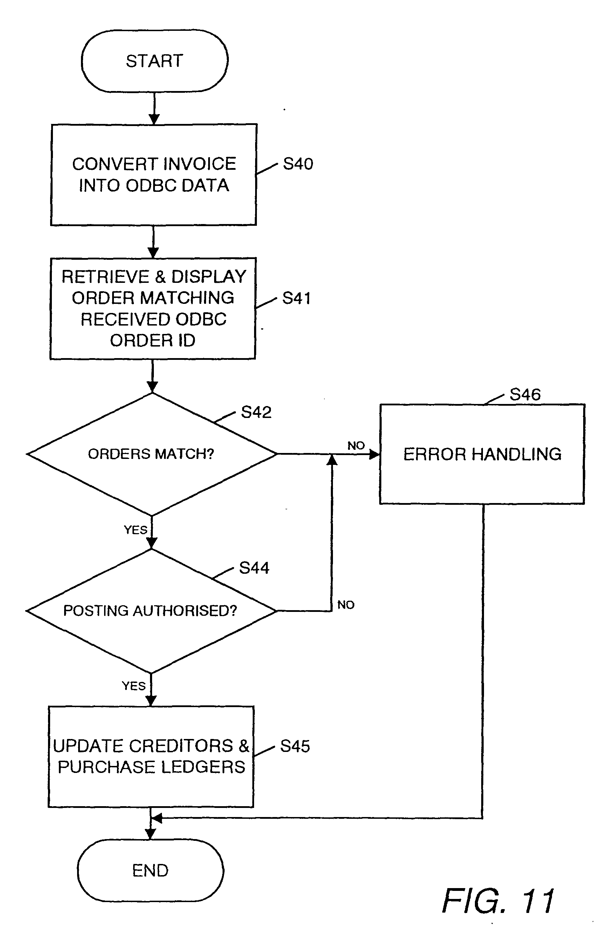

If the signal received by the clock 91 does not indicate that the review of the content of the databases 22 of the accountancy system 5 is required or after such a review has been conducted and any required messages have been dispatched to the server 4, the control module 90 then (S3) determines whether a signal has been received from the message receipt buffer 93 indicating that a message indicative of a new invoice being raised has been received from the communication network 3. If the control module 90 determines that such a message has been received from the message receipt buffer 93 the control module 90 then causes (S4) the received message to update the databases 22 of the accountancy system 5 as will be described in detail with reference to Figure 11 later.

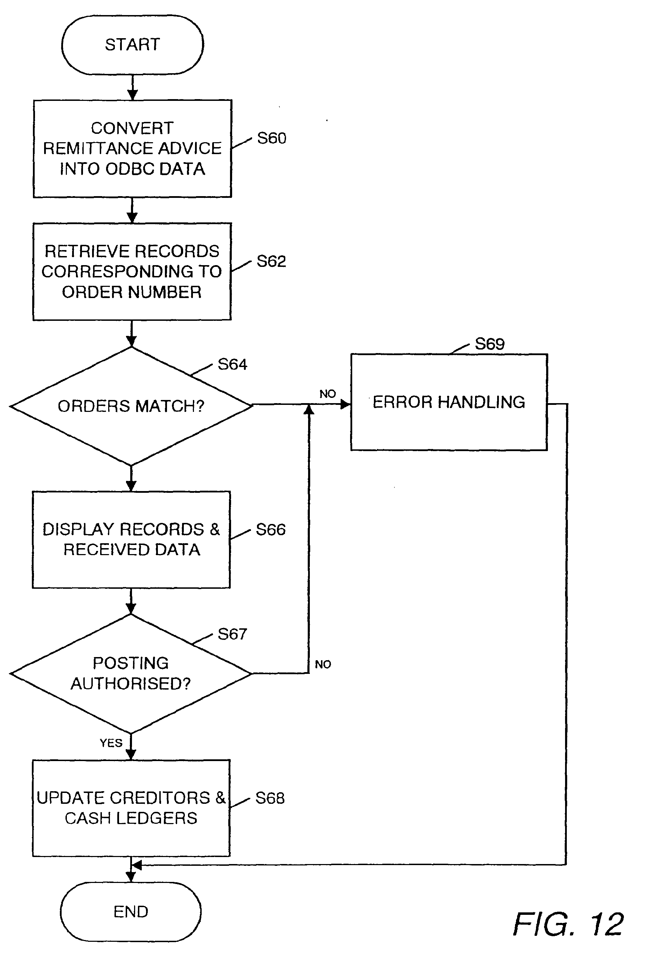

After a control module 90 has determined whether a message indicative of a new invoice has been received by the message receipt buffer 93 and caused the accountancy system 5 to be updated if necessary, the control module 90 then determines whether a signal has been received from the message receipt buffer 93 indicating that a message indicative of the receipt of the making of a payment has been received (S5). If a signal is received from the message receipt buffer 93 which is indicative of receipt of a message indicative of a payment, the control module 90 then causes (S6) the accountancy system 5 to be updated to account for the payment as will be described in detail with reference to Figure 12 later.

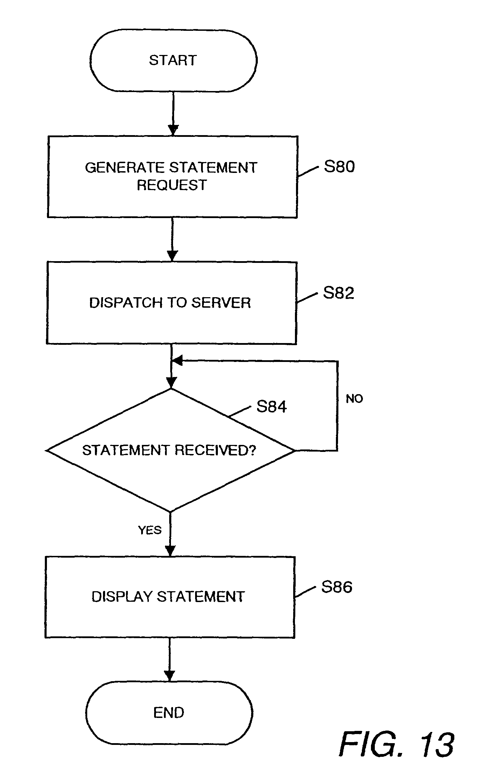

After the control module 90 has determined (S5) that the message receipt buffer 93 has not received data indicative of the making of a payment or has updated the accountancy system 5 if such a message has been received, the control module 90 then determines (S7) whether a statement has been requested utilizing the statement processing module 92. If such a request has been received by the statement processing module 92 the control module 90 causes the statement processing module 92 to obtain and display statement information in accordance with the statement request (S8) as will be described in detail with reference to Figure 13. After obtaining and displaying requested statement information or if the control module 90 determines that no such statement has been requested the processing of the control module 90 comes to an end.

Figure 8 is a flow diagram of the processing of the control module 90 following the determination (S1) that a review of the content of the account databases 22 of the accountancy system 5 is required.

Initially (S20) the control module 90 sends to the Open Database Connectivity Interface 70 (hereinafter referred to as the ODBC interface 70) of the conversion module 7 an instruction to retrieve from the sales ledger database 28 the records in the sales ledger database 28 which have been created since the control module 90 last requested that such records were retrieved, together with any client records within the client database 24 corresponding to the client identification number 54 of those records within the sales ledger database 28. This causes the ODBC interface 70 to create copies of the requested records from the client database 24 and the sales ledger database 28 which are then stored within the Open Database Connectivity record database 72 (hereinafter referred to as the ODBC record database 72) in open database connectivity format.

When the control module 90 has determined that all the requested records have been copied into the ODBC record database 72 the control module 90 then invokes (S21) the message generation module 94 to create and dispatch XML messages corresponding to the retrieved records in the ODBC record database 72 to the server 4 via the communications network 3.

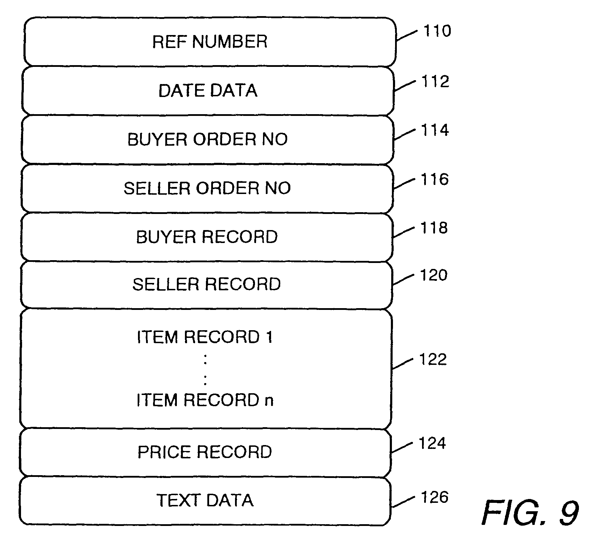

Figure 9 is a block diagram of a data structure for a message generated by the message generation module 94.

In this embodiment, the message comprises XML data comprising: a unique reference number 110 generated automatically by the message generation module 94; date data 112, a buyer order number, 114 and a seller order number 116 corresponding to the date data 52, a buyer order number 56 and a seller order number 58 of a record retrieved from the sales ledger database 28; a buyer record 118 corresponding to the client record retrieved from the client database 24 identified by the client identification number 54 of the record retrieved from the sales ledger database 28; a seller record being a copy of the data contained within the company details record 96 of the invoice processing module 9 and a number of item records 122, a price record 124 and text data 126 corresponding to the item records 60, price record 62 and text data 64 as contained within the record retrieved from the sales ledger database 28.

When an XML message has been generated for a record from the sales ledger database 28 stored within the ODBC record database 72 the message generation module 94 causes the newly generated XML message to be dispatched to the server 4 via the communications network 3. The copy of the record within the ODBC record database 72 is then deleted and further messages are generated by the message generation module 94 in respect of each of the other records retrieved until no further records remain in the ODBC record database 72.

When the control module 90 determines that no records retrieved from the sales ledger database 28 remain within the ODBC record database 72 the control module 90 then (S22) causes a signal to be sent to the ODBC interface 70 to request retrieval from the accountancy system 5 records from within the purchase ledger database 32 indicative of purchase invoice records which have been updated within the creditors ledger database 34, since the last request for retrieval of payment invoices together with client records from the client database 44 corresponding to the client records identified by the client identification number 54 of the records retrieved from the purchase ledger database 32.

When all of the required records from the purchase ledger database 32 and associated records from within the client database 24 have been copied from the accountancy system 5 into the ODBC record database 72 the control module 90 then causes the message generation module 94 to generate and dispatch (S23) for each of the copies of the client records within the ODBC record database 72 a remittance message.

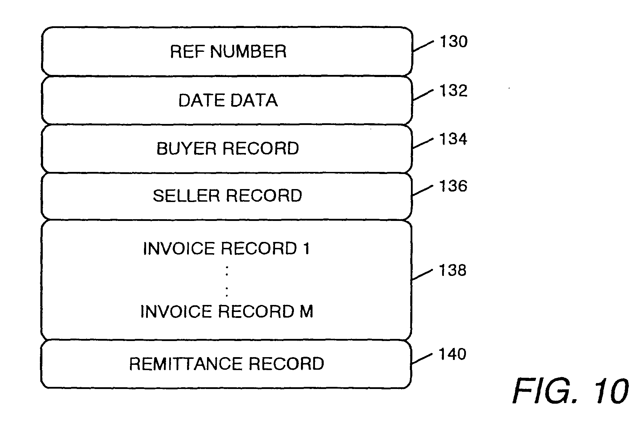

Figure 10 is a schematic block diagram of a data structure for a remittance message. In this embodiment a remittance message comprises XML data comprising: a uniquely generated reference number 130 generated by the message generation module 94; date data corresponding to the time indicated by the clock 91; a buyer record 134 corresponding to a copy of the company details record 96 from the invoice processing module 9; a seller record 136 comprising a copy of the client record within the client record database 24 corresponding to the client ID number 54 of the one of the record retrieved from the purchase ledger database 32; one or more invoice records 138 corresponding to copies of each of the records in the ODBC record database 72 having a client identification number 54 corresponding to the client identification number of the client record included within the message; and a remittance record 140 comprising a total amount paid and a total amount of tax determined by summing the corresponding values within the price records 124 of each of the invoice records 138 within the message.

When a message of the form illustrated in Figure 10 has been generated by the message generation module 94 it is then dispatched to the server 4 via the communications network 3. The message generation module 94 then causes all of the records within the ODBC record database 72 which have been incorporated into the message dispatched by the message generation module 94 to be deleted from the ODBC record database 72 and then generates further messages utilizing any remaining records within the ODBC record database 72. When no records remain within the ODBC record database 72 this is detected by the control module 90 which then proceeds to determine whether any new invoices have been received (S3).

As will be described in detail later following the dispatch of messages created by the message generation module 94, these messages are processed by the server 4 which causes copies of the messages to be stored within the invoice database 17 or remittance database 19 of the server 4 and for further messages to be dispatched to the computer 2 of the plurality of computers 1,2 of the company or department which an invoice or payment relates which is identical to the message received by the server 4 which then causes the accountancy system of the computer 2 to be updated.

Figure 11 is a flow diagram of the processing of the control module 90 of the invoice processing module 9 following receipt of a message in the format of Figure 9, indicative of the raising of an invoice on an accountancy system 5 of another computer.

The control module 90 initially (S40) causes the XML message to be passed from the message receipt buffer 93 to the message conversion module 95 which then utilizes the received XML message to generate a client record, and an order record in Open Database Connectivity format, which are stored within the ODBC record database 72. This is achieved by the message conversion module 95 generating a client record corresponding to the seller record 120 of the message; an order record comprising the seller order number 116, buyer order number 114 and the one or more item records 122 of the received message.

The control module 90 then causes (S41) the ODBC interface 70 to attempt to retrieve from the client database 24 and order processing database 26 of the accountancy system 5 a client record and order record corresponding to the client record and order record generated by the message conversion module 95.

The control module 90 then (S42) determines whether such records have been retrieved. If this occurs it indicates that the message received by the message receipt buffer 93 relates to the raising of an invoice for an order for which records exist within the order processing database 26 of the accountancy system 5. After these records are retrieved the control module 90 then causes to be displayed to a user data indicative of the content of the message received and the retrieved order record retrieved from the order precessing database 26 to enable a user to verify (S44) the content of the message received and to authorise the posting of invoice data onto the accountancy system 5 of the computer 2.

If a user having reviewed the content of the message and compared it with the order data retrieved from the order processing database 26 inputs via an input device (not shown) an authorisation for the posting of a new invoice within the accountancy system 5 the control module 90 then causes (S45) the message conversion module 95 to generate within the ODBC record database 72 a record for inclusion within the creditors ledger database 34 and purchase ledger database 32 of the accountancy system 5 comprising the next available invoice identification number as an invoice ID 50, date data 52 corresponding to the date data 112 of the received message; a client identification number 54 corresponding to the client identification number of the client record retrieved from the client database 24 and a buyer order number 56, seller order number 58, one or more item records 60, a price record 62 and text data 64 corresponding to the buyer order number 114, seller order number 116, one or more item records 112, price record 124 and text data 126 of the received message. The control module 90 then causes the ODBC interface 70 to cause the accountancy system 5 to update the purchase and creditors ledgers 32,34 by incorporating the newly generated records stored within the ODBC record database 72 to reflect acceptance of the liability indicated by the received message.

If (S42) no order data or client record corresponding to a received message can be retrieved from the accountancy system 5 or authorisation for the posting of an invoice (S44) is not received by the control module 90 causes the data indicated by a received message to be displayed (S46) to a user together with a warning.

Thus in this way by causing the receipt of a message indicating the raising of an invoice on one computer 1 to generate a corresponding record within the accountancy system 5 of another computer 2 a means is provided by which the repeated entry of data corresponding to the same invoice may be avoided. However by causing the control module 90 to determine firstly whether a message received corresponds to an order record within the order processing database 26 of an accountancy system 5 and additionally requiring user confirmation that records are to be updated, a means is provided for ensuring that the integrity of an individual company's accountancy records can be maintained.

Figure 12 is a flow diagram of the processing of the control module 90 following a determination of whether (S5) the message receipt buffer 93 has received an XML message indicative of the making of a payment of invoices of the format shown in Figure 10. Initially (S60) the control module 90 causes the message conversion module 95 to utilize the XML message within the message receipt buffer 93 to generate in Open Database Connectivity format, a client record corresponding to the content of the buyer record 134 of the message within the message receipt buffer 93 and one or more invoice records corresponding to the one or more invoice records corresponding to the one or more invoice records 138 within the XML message. The generated client record and invoice records are then stored within the ODBC record database 72.

The control module 90 then causes the ODBC interface 70 to retrieve (S62) from the debtors ledger database 30 records having seller order numbers 58 corresponding to the seller order numbers 58 of the invoice records stored within the ODBC record database 72 together with a client record from the client database 24 corresponding to the client record stored within the ODBC record database 72. These records are then retrieved from the accountancy system 5 and stored within the ODBC record database 72.

The control module 90 then (S64) determines whether the content of the records retrieved from the accountancy system 5 matches the records generated by the message conversion module 95 stored within the ODBC record database 72. If the records retrieved match the records generated by the message conversion module 95 the control module 90, invokes the banking module 11 to obtain bank account data for the account into which payment should have been made. The control module 90 then causes (S66) the retrieved accountancy records to be displayed together with the data contained within the message buffer 93 and the bank account data to a user on a display (not shown). The control module 90 then waits (S67) for a user to input via an input device (not shown) an indication that the posting of the displayed invoices is authorised. If such an indication is input by a user the control module 90 causes (S68) the ODBC interface 70 to update within the debtors ledger 30 those records corresponding to the records within the ODBC record database 72 and amends the cash ledger database 36 to reflect the payment indicated within the remittance record 140 of the received message.

If either the control module 90 determines that the invoice records 138 within the message received by the message receipt buffer 93 do not correspond to records within the debtors database or a user indicates that posting of an invoice record is not authorised the control module 90 causes (S69) to be shown to a user on a display (not shown) a warning indicating that liability reflected in the message received by the message receipt buffer 93 has not been accepted.

Figure 13 is a flow diagram of the processing of the control module 90 following a determination (S7) that a statement has been requested. Initially the control module 90 generates (S80) a statement request to be dispatched to the server 4.

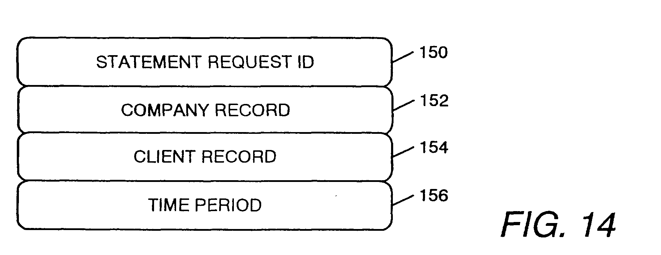

Figure 14 is a schematic block diagram of an exemplary data structure for a statement request message generated by the message generation module 94 in this embodiment of the present invention. The statement request message comprises XML data comprising: a statement request ID number 150 which is a uniquely generated identification number generated by the control module 90; a buyer record 152 corresponding to a copy of the company details record 96; a client record 154 comprising a copy of a client record retrieved from the client database 24 is stored within the ODBC record database 72; and the time period 156 corresponding to the time period input to the statement processing module 92.

In this embodiment, the generation of a statement request is achieved by the central module 90 initially utilizing the input request detailing a client and time period input into the statement processing module 92. The control module 90 then causes the ODBC interface 70 to retrieve from the client database 24 of the accountancy system 5 a copy of the client record corresponding to the client for which a statement has been requested. A copy of the requested client record is then generated and stored within the ODBC record database 72. The control module 90 then causes the message generation module 94 to generate an XML message for dispatch to the server via the communications network 3 utilizing the retrieved client record, the company details record 96 and the time period input into the statement processing module 92.

When a statement request message has been generated by the message generation module 94 the message generation module 94 then causes the statement request message to be dispatched (S82) to the server 4 via the communication network 3. Once a statement request has been dispatched the control module 90 then (S84) monitors the content of the message receipt buffer 93 to determine whether statement data corresponding to the statement request ID 150 of the newly dispatched statement request has been received by the message receipt buffer 93 when it is determined that a statement message has been received corresponding to the statement request ID 150 of the dispatched request has been received by the message receipt buffer 93, the control module 90 causes the statement message data to be transferred from the message receipt buffer 93 to the statement processing module 92 and displayed (S86) to a user via a display (not shown). The processing of the control module 90 then comes to an end.

The processing of the server 4 following receipt of messages from invoice processing modules 9 will now be described.

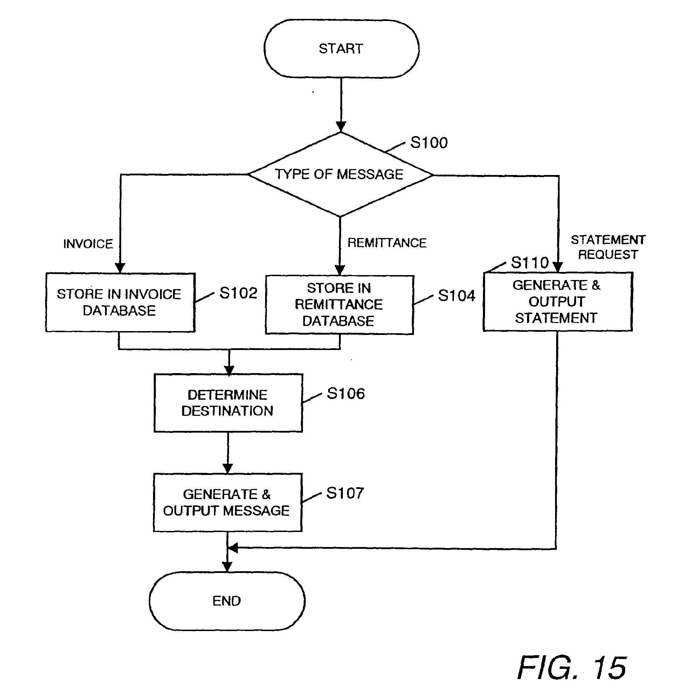

Figure 15 is a flow diagram of the processing of the data control module 102 of the server 4 in this embodiment of the present invention. Initially, when an XML message is received by the server 4 from the communications network 3 it is stored in the message buffer 100. The database control module 102 then determines (S100) whether the XML message received is a message generated when a new invoice is raised or whether the XML message is a message generated when a payment is recorded within accountancy system 5 or whether the XML message relates to a statement request.

If the XML message comprises a message generated following the raising of a new invoice the control module 102 causes (S102) a copy of the message to be stored as an invoice record within the invoice database 17. If the XML message relates to the making of a payment the control module 102 causes (S104) a copy of the message to be stored as a payment record within the remittance database 19.

After storing a copy of the XML message in either the invoice database 17 or the remittance database 19 the database control module 102 determines (S106) the intended destination for that message. In the case of an XML message relating to the raising of a new invoice, this is achieved by the database control module 102 retrieving from the user database 106 address data corresponding to the buyer record 118 of the XML message stored within the message buffer 100. In the case of an XML message generated following the payment of an invoice, the database control module 102 retrieves address data from the user database from a record corresponding to the seller record 136 of the XML message stored within a message buffer 100. When a destination has been determined utilizing the user database 106 the database control module 102 causes (S108) the contents of the message buffer 100 to be transferred to the message output module and be dispatched to the determined destination. The processing of the database control module 102 then comes to an end.

Thus in this way by causing XML messages to be routed via the server 4 the storage of address data for individual customers within the computer systems 1,2 of the individual companies is avoided since all messages are dispatched to the server 4 which provides a means of central storage of the required address data.

If (S100) the database control module 102 determines that an XML message received by the message buffer 100 relates to a statement request the database control module 102 then causes to be generated (S110) within the message output module 104 a statement message which is dispatched to the computer 1,2 from which the statement request originated.

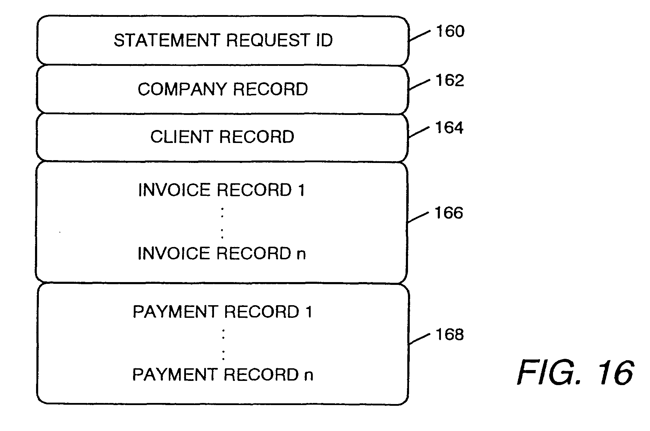

Figure 16 is an exemplary block diagram of a data structure for a statement generated by the database control module 102. In this embodiment a statement comprises XML data comprising: a statement request ID 160 corresponding to the statement request ID 150 of the statement request received by the message buffer 100; a company record 162 and a client record 164 corresponding to the company record 152 and client record 154 of the received statement request one or more invoice records 166 comprising copies of any invoice records within the invoice database 17 having as their buyer record 118 and seller record 120 data corresponding to the company record 162 client record 164 of the statement and request one or more payment records 168 comprising any payment records within the remittance database 19 having a buyer record 134 and a seller record 136 corresponding to the company record 162 and client record 164 of the statement request, where the invoice records 166 and payment records 168 all have associated date data 112,132 which falls within the time period 156 of the received request.

Once a statement has been generated by the database control module 102, the generated statement is then dispatched back to the computer 1,2 from which the statement request has been received where it is processed by the statement processing module 94 as has previously been described.

In the previous embodiment computer apparatus has been described in which XML messages indicating that an invoice has been raised or paid are automatically dispatched from the server 4 following the receipt of an XML message by the server 4 indicating that such an action has occurred and that the invoice processing modules 9 or each of the computers is arranged to monitor for the receipt of messages from the server. It will be appreciated that the present invention is equally applicable to computer networks where data indicating whether an invoice has been raised or paid on one accountancy system is stored centrally with individual computers of the computer network periodically accessing the central storage to determine whether data relating to the update of accountancy records relating to the company or department for that computer are stored within the central storage system.

In a previous embodiment a computer network has been described in which the updating of an accountancy system 5 in one computer 1 is arranged to cause a corresponding update of an accountancy system 5 within another computer 2 whenever an invoice is raised or payment is made. It will be appreciated that an invoice processing module 9 could be provided which causes the update of associated accountancy systems 5 when other actions occur. Thus for example the invoice processing module 9 could be arranged to monitor the input of order records within an order processing database 26 of an accountancy system 5 and upon detection of the entry of a new order record be arranged to dispatch a message which causes the updating of order processing database of an associated accountancy system 5 to reflect the existence of a new order.

In such a system since the records of the order processing database 26 of the computers 1,2, will be generated on the basis of one set of data input the chances that the records corresponding to the same order will match and therefore be maximised. If records within the order processing database 26 of accountancy systems 5 of different computers are caused to be updated in this way the monitoring of amendment of records within an order processing database 22 could also be provided for so that when the status of an order changes, for example, when an order is dispatched the status of the corresponding order in the accountancy system 5 of another computer could also be updated to reflect this change of status. Similarly, when an order has been received, entry of this information into the order database could cause the generation of a message which is sent to the other party to the contract which causes the update of the order processing database 22 of the other parties accountancy system 5 to indicate confirmation of receipt of an order.

Although in the previous embodiment, upon receipt of messages indicating the raising of payment of an invoice that has been displayed to a user on a computer the present invention is equally applicable to computer systems where an accountancy system 5 is stored on a computer which itself is part of a network of computers within a company or department. In such a system the data required to assess whether a raised invoice or payment is to be posted to the accountancy system 5 could be dispatched into any part of the network. In particular, the system could be arranged so that data could be automatically dispatched to a computer of the network associated with an individual who placed an order so that posting of different invoices and payments to the accountancy system 5 could be authorised by different individuals.

Although in the previous embodiment a description has been made of accountancy systems where records within different accountancy systems 5 contain only information which is also present within an accountancy system where an invoice is originally raised, additional information could also be stored when a raised invoice is initially authorised for storage within an accountancy system 5. Thus for example, when requiring a user to input an indication that posting of an invoice is authorised, the processing module 90 could also request a payment date for payment of an invoice. The accountancy system 5 could then be arranged to cause a newly generated credit record to be deleted automatically and for a payment to be made via the banking module 11 at a pre-set time subsequent to the posting of an authorised invoice to the accountancy system 5.

Additionally, when invoices are posted to an accountancy system 5, ordinarily, nominal ledger data is added to the invoice data to provide a categorisation of the expenditure for accounting purposes. In the embodiments of the invention, the control module 90 could be arranged to request the input of such nominal ledger data for inclusion within the records of the accountancy system at the time an invoice is posted. Alternatively, a database of nominal ledger codes could be provided associating nominal ledger codes with the content of item records or client records. The control module 90 could then be arranged to include automatically within a record for storage within the accountancy system, a nominal ledger code selected on the basis of the item records or client records retrieved upon receipt of a message indicating the raising of an invoice.

Although in the above described embodiments reference has been made to the generation of records in Open Database Connectivity format and the transmission of data and messages comprising XML data, it will be appreciated that the present invention is not dependent upon the selection of a specific format being adopted and that any suitable format of data could be selected for the generation and transmission of data between accountancy systems.

In the above described embodiments, reference has been made to the periodic monitoring of the content of an accountancy systems records which is then utilized to generate data to cause another accountancy system. It will be appreciated that a system could be provided where the manual update of records within an accountancy system automatically caused data to be immediately dispatched so that a corresponding update in another system could be performed.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A computer network for facilitating the storage and amendment of accountancy records indicative of reciprocal obligations comprising:
a plurality of computers; and
a communication network operable to transmit data between said plurality of computers,
wherein each of the plurality of computers comprises:
means for storing and amending accountancy records each indicative of one side of a reciprocal obligation;
monitoring means for monitoring the amendment of said accounting records within said computer, said monitoring means being arranged to output data indicative of the content of amended accountancy records to said communications network;
receiving means for receiving data indicative of the content of amended accountancy records stored within other computers of said plurality of computers; and
update means arranged to initiate the amendment of accountancy records within a computer utilizing data received by said receiving means wherein said update means is arranged to initiate amendments to accounting records indicative of the other side of the reciprocal obligation to that indicated by data received by said receiving means.

2. A computer network in accordance with claim 1, further comprising routing means for routing data indicative of the content of amended accountancy records via said communications network, wherein each of said monitoring means of said plurality of computers is arranged to output data indicative of the content of amended accountancy records to said routing means via said communications network and said routing means is arranged to cause said data to be passed to the receiving means of a selected computer of said plurality of computers, said routing means being arranged to select said computer utilizing the received data indicative of the content of amended accountancy records output by said monitoring means.

3. A computer network in accordance with claim 2, wherein said routing means further comprises storage means for storing data representative of data output to said routing means by said monitoring means of said plurality of computers.

4. A computer network in accordance with claim 1, further comprising storage means for storing data indicative of the content of amended accountancy records, said storage means being arranged to output data indicative of the content of amended accountancy records in response to a request received from any of said plurality of computers, wherein said monitoring means of each of said plurality of computers is arranged to output data indicative of the content of amended accountancy records to said storage means via said communications network, wherein each of said plurality of computers further comprises means for outputting a request for the output of stored data stored within said storage means.

5. A computer network in accordance with any preceding claim, wherein each of said plurality of computers further comprises input means for inputting data indicative of authorisation for the update of accountancy records within said computer, wherein said update means is arranged only to initiate the amendment of accountancy records following the receipt of data indicative of authorisation of an update input via said input means.

6. A computer network in accordance with claim 5, wherein said receiving means is arranged upon receipt of data indicative of the content of amended accountancy records to retrieve from said means for storing accountancy records within said computer records corresponding to said amended records, said plurality of computers each further comprising display means for displaying retrieved records and data indicative of said amended accountancy records prior to input of data indicative of authorisation of an update of accountancy records.

7. A computer network in accordance with claim 5 or claim 6, wherein said input means is arranged to permit the input of additional data when data indicative of the authorisation of an update of accountancy records is input, wherein said update means is arranged to initiate amendments to said accounting records within said computer utilizing said data received by said receiving means, and said data input by said input means.

8. A computer network in accordance with claims 4 to 7, further comprising association means for associating data indicative of amended accountancy records with additional data, wherein said update means is arranged to update records within a computer utilizing said additional data associated with data indicative of amended accountancy records via said association means.

9. Computer apparatus for facilitating the storage and amendment of accountancy records indicative of reciprocal obligations comprising:
means for storing and amending accountancy records each indicative of one side of a reciprocal obligation; and
monitoring means for monitoring the amendment of said accounting records within said computer, said monitoring means being arranged to output data indicative of the content of amended accountancy records.

10. Apparatus in accordance with claim 9, further comprising:
receiving means for receiving data indicative of the content of amended accountancy records stored within other computers of said plurality of computers; and
update means arranged to initiate the amendment of accountancy records within a computer utilizing data received by said receiving means wherein said update means is arranged to initiate amendments to accounting records indicative of the other side of the reciprocal obligation to that indicated by data received by said receiving means.

11. Computer apparatus for facilitating the storage and amendment of accountancy records indicative of reciprocal obligations comprising:
means for storing and amending accountancy records each indicative of one side of a reciprocal obligation;
receiving means for receiving from a communications network data indicative of the content of amended accountancy records stored within other computers; and
update means arranged to initiate the amendment of accountancy records within a computer utilizing data received by said receiving means wherein said update means is arranged to initiate amendments to accounting records indicative of the other side of the reciprocal obligation to that indicated by data received by said receiving means.

12. Apparatus in accordance with any of claims 10 or 11, further comprising input means for inputting data indicative of authorisation for the update of accountancy records within said computer, wherein said update means is arranged only to initiate the amendment of accountancy records following the receipt of data indicative of authorisation of an update input via said input means.

13. Apparatus in accordance with claim 12, wherein said receiving means is arranged upon receipt of data indicative of the content of accountancy records to retrieve from said means for storing accountancy records within said computer records corresponding to said amended records, said apparatus further comprising display means for displaying retrieved records and data indicative of said amended accountancy records prior to input of data indicative of authorisation of an update of accountancy records via said input means.

14. Apparatus in accordance with claim 12 or claim 13, wherein said input means is arranged to permit the input of additional data when data indicative of the authorisation of an update of accountancy records is input, wherein said update means is arranged to initiate amendments to said accounting records within said computer utilizing said data received by said receiving means, and said data input by said input means.

15. Apparatus in accordance with claims 9 to 14, further comprising association means for associating data indicative of amended accountancy records with additional data, wherein said update means is arranged to update records within a computer utilizing said additional data associated with data indicative of amended accountancy records via said association means.

16. A storage medium storing computer implementable instructions for generating within a programmable computer, apparatus in accordance with any of claims 9 to 15.
